# EUROPEAN PATENT SPECIFICATION

(11) **EP 3 209 728 B1**
(45) Date of publication and mention of the grant of the patent: **31.10.2018**
(21) Application number: 15778047.9
(22) Date of filing: 25.09.2015
(51) Int. Cl.: C08L 69/00, C08L 67/02, C08K 5/5333, C08K 5/5399, C08K 5/5397, C08L 83/10, C08L 85/02

(54) **POLYCARBONATE/POLYESTER COMPOSITION AND ARTICLE PREPARED THEREFROM**
POLYCARBONAT-/POLYESTERZUSAMMENSETZUNG UND DARAUS HERGESTELLTER ARTIKEL
COMPOSITION DE POLYCARBONATE/POLYESTER ET ARTICLE PRÉPARÉ À PARTIR DE CELUI-CI

(30) Priority: 22.10.2014 US 201462067044 P
(43) Date of publication of application: 30.08.2017
(73) Proprietor: SABIC Global Technologies B.V., 4612 PX Bergen op Zoom (NL)
(72) Inventor: CHEN, Lin, Shanghai 201319 (CN); SHI, Hongtao, Shanghai 201319 (CN); WAN, Shun, Shanghai 201319 (CN); SHEN, Dake, Shanghai 201319 (CN)
(74) Representative: Balder IP Law, S.L.
(86) International application number: PCT/IB2015/057387
(87) International publication number: WO 2016/063154

(56) References cited:
- WO-A1-2014/084157
- US-A- 4 093 582
- US-A1- 2013 313 493
- US-A1- 2013 317 142
- US-A1- 2014 107 264

## Description

### BACKGROUND OF THE INVENTION

Polycarbonates (PC) are well known engineering plastics having excellent material properties including ductility, heat resistance, and transparency. Depending on the application, blends of polycarbonates with one or more thermoplastic polymers can be of interest to improve material properties including chemical resistance, processability, dimensional stability, heat resistance, and various mechanical properties including impact strength and tensile strength. Such thermoplastic polymers can include polyesters, for example, poly(alkylene terephthalate)s. Polycarbonate/polyester blends have also been found to have improved flowability and weld line strength, and are attractive for use in automotive and electronic applications. However, in applications that demand low-halogen content compositions, achieving a desirable balance between mechanical properties and flame retardancy in polycarbonate/polyester blends remains a challenge. Current non-halogenated flame retardants are often organic phosphorus-containing additives, many of which require high loading in the composition to be effective. This can cause severe plasticization and drastically decrease mechanical and thermal properties, including impact strength and heat resistance. For example, U.S. Patent No. 7,067,567 B2 of Seidel et al. describes a polycarbonate/polyester composition with a flame retardant that includes bisphenol A bis(diphenyl phosphate). The composition exhibited the desired V-0 rating in the UL 94 Vertical Burn Test, but was limited to less than 12 parts by weight of polyester, which limits the chemical resistance of the composition. The composition further exhibited a relatively low notched Izod impact strength of about 50 kilojoules/meter² measured at room temperature according to ISO 180/1A.

US 2013/317142 A1 discloses a flame retardant composition comprising: 10 to 75 weight percent of a polycarbonate; 10 to 30 weight percent of a polyester; 10 to 35 weight percent of a polysiloxane-polycarbonate copolymer; and a phosphazene flame retardant, where all weight percents are based on the total weight of the flame retardant composition. US 2014/107264 A1 discloses a composition comprising: (a) 10 to 50 percent by weight of polyester such as a polyethylene terephthalate (PET) or polybutylene terephthalate (PBT); (b) 20 to 70 percent by weight of polycarbonate A which is a copolycarbonate of 2-phenyl-3,3-bis(4-hydroxyphenyl)phthalimidine (PPPBP) and another bisphenol; (c) 10 to 60 percent by weight of polycarbonate B, which is a polycarbonate-polysiloxane copolymer; and (d) 4 to 10 percent by weight of a non-halogenated flame retardant selected from the group consisting of bisphenol-A bis(diphenylphosphate (BPADP), polyphosphonate, phosphazene, and solid phosphonate ester. Both documents do not suggest the combination of a phosphazene flame retardant with an organophosphine oxide or a polyphosphonate. Furthermore, US 2014/107264 A1 teaches away from the combination of any two flame retardants listed in paragraph (d).

There remains a need for low halogen content polycarbonate/polyester compositions that provide a substantially improved balance of impact strength, heat resistance, and flame retardancy. In particular, there is a need for compositions that provide improved impact strength without sacrificing heat resistance or flame retardancy.

### BRIEF SUMMARY OF EMBODIMENTS OF THE INVENTION

One embodiment is a composition comprising, based on the total weight of polymers and flame retardants, 25 to 75 weight percent of an aromatic polycarbonate; 10 to 40 weight percent of a polycarbonate-polysiloxane block copolymer; 10 to 30 weight percent of a poly(alkylene terephthalate); and 5 to 20 weight percent of a flame retardant comprising 2 to 18 weight percent of an oligomeric or polymeric bis(aryloxy)phosphazene; 2 to 18 weight percent of an organophosphine oxide, an oligomeric or polymeric aromatic phosphonate, or a combination thereof; and 0.05 to 5 weight percent of a drip retardant.

Another embodiment is an article comprising the composition.

These and other embodiments are described in detail below.

### DETAILED DESCRIPTION OF THE INVENTION

The present inventors have determined that a specific composition provides a substantially improved balance of impact strength, heat resistance, and flame retardancy. The composition includes particular amounts of a polycarbonate, a polycarbonate-polysiloxane block copolymer, a poly(alkylene terephthalate), and a flame retardant that includes an oligomeric or polymeric bis(aryloxy)phosphazene in combination with one or both of an organophosphine oxide and an oligomeric or polymeric aromatic phosphonate.

The improved impact strength can be manifested as a Notched Izod impact strength of greater than or equal to 500 joules/meter, specifically 500 to 1100 joules/meter, determined according to ASTM D256-10 at 23°C. The heat resistance can be manifested as a Vicat softening temperature of greater than or equal to 100 °C, specifically 100-140 °C, determined at a load of 50 newtons and a heating rate of 120 °C/hour according to ASTM 1525-09. The flame retardancy can be manifested a UL 94 Vertical Burn Test rating of V-0 at a thickness of 1.2 millimeters.

Thus, one embodiment is a composition comprising, based on the total weight of polymers and flame retardants, 25 to 75 weight percent of an aromatic polycarbonate; 10 to 40 weight percent of a polycarbonate-polysiloxane block copolymer; 10 to 30 weight percent of a poly(alkylene terephthalate); and 5 to 20 weight percent of a flame retardant comprising 2 to 18 weight percent of an oligomeric or polymeric bis(aryloxy)phosphazene; 2 to 18 weight percent of an organophosphine oxide, an oligomeric or polymeric aromatic phosphonate, or a combination thereof; and 0.05 to 5 weight percent of a drip retardant.

Component amounts are expressed in units of weight percent and calculated based on the total weight of polymers present at greater than 2 weight percent, and flame retardants. Conversely, fillers, non-polymeric additives, polymeric additives present at 2 weight percent or less, and colorants are not included in the weight basis for weight percent calculations. It is possible that a single component can be both a polymer and a flame retardant (e.g., brominated polycarbonate). In such cases, the component amount is counted once (not twice) for its contribution to the total weight of polymers and flame retardants.

The composition comprises an aromatic polycarbonate. "Aromatic polycarbonate" as used herein means a polymer or copolymer having repeating structural carbonate units of the formula 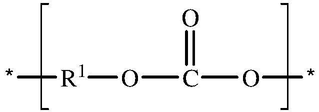 wherein at least 60 percent of the total number of R¹ groups are aromatic. Specifically, each R¹ can be derived from a dihydroxy compound such as an aromatic dihydroxy compound of the formula 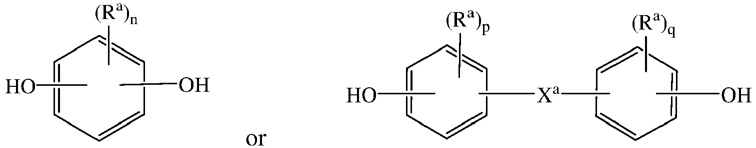 wherein n, p, and q are each independently 0, 1, 2, 3, or 4; R^{a} is independently at each occurrence unsubstituted or substituted C₁₋₁₀ hydrocarbyl; and X^{a} is a single bond, -O-, -S-, -S(O)-, -S(O)₂-,-C(O)-, or a C₁₋₁₈ hydrocarbylene, which can be cyclic or acyclic, aromatic or non-aromatic, and can further comprise one or more heteroatoms selected from oxygen, nitrogen, sulfur, silicon, or phosphorous. As used herein, the term "hydrocarbyl", whether used by itself, or as a prefix, suffix, or fragment of another term, refers to a residue that contains only carbon and hydrogen unless it is specifically identified as "substituted hydrocarbyl". The hydrocarbyl residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. In the context of aromatic polycarbonates designated "halogen-free", "substituted" means including at least one substituent such as a hydroxyl, amino, thiol, carboxyl, carboxylate, amide, nitrile, sulfide, disulfide, nitro, C₁₋₁₈ alkyl, C₁₋₁₈ alkoxyl, C₆₋₁₈ aryl, C₆₋₁₈ aryloxyl, C₇₋₁₈ alkylaryl, or C₇₋₁₈ alkylaryloxyl. When an aromatic polycarbonate is not halogen-free, the term "substituted" further permits inclusion of halogens (i.e., F, Cl, Br, I).

Some illustrative examples of specific dihydroxy compounds include the following: bisphenol compounds such as 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 1,1-bis(hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha,alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorene, 2,7-dihydroxypyrene, 6,6'-dihydroxy-3,3,3',3'-tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole; resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, and 2,3,5,6-tetra-t-butyl hydroquinone.

Specific dihydroxy compounds can be selected from the group consisting of resorcinol, 2,2-bis(4-hydroxyphenyl) propane ("bisphenol A" or "BPA"), 3,3-bis(4-hydroxyphenyl) phthalimidine, 2-phenyl-3,3'-bis(4-hydroxyphenyl) phthalimidine (also known as N-phenyl phenolphthalein bisphenol, "PPPBP", or 3,3-bis(4-hydroxyphenyl)-2-phenylisoindolin-1-one), 1,1-bis(4-hydroxy-3-methylphenyl)cyclohexane (DMBPC), 1,1-bis(4-hydroxy-3-methylphenyl)-3,3,5-trimethylcyclohexane (isophorone bisphenol), and combinations thereof.

In some embodiments, at least 90 percent of the total number of R¹ groups in the polycarbonate have the formula 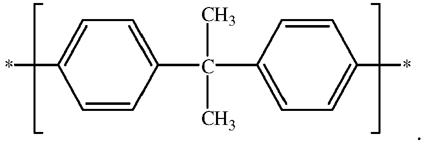 In some embodiments, the polycarbonate comprises or consists of bisphenol A polycarbonate resin.

More than one polycarbonate can type be used. For example, in some embodiments the composition comprises a combination of a bisphenol A polycarbonate and a copolycarbonate comprising units derived from bisphenol A and 2-phenyl-3,3'-bis(4-hydroxyphenyl)phthalimidine (PPPBP). PPPBP has the structure 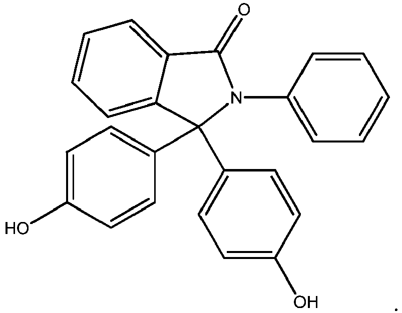 In such embodiments, the mole percent of units derived from PPPBP can be 20 to 50 mole percent, specifically 25 to 40 mole percent, based on the total moles of carbonate repeat units. Also in such embodiments, the copolycarbonate can have a weight average molecular weight of 10,000 to 50,000 Daltons, specifically 15,000 to 35,000 Daltons, as measured by gel permeation chromatography using polycarbonate standards. When the aromatic polycarbonate comprises a combination of a bisphenol A polycarbonate and a copolycarbonate comprising units derived from bisphenol A and 2-phenyl-3,3'-bis(4-hydroxyphenyl) phthalimidine (PPPBP), the two polycarbonates can be present in a weight ratio of 1:9 to 9:1, specifically 2:8 to 5:5.

More than one polycarbonate molecular weight can be used. For example, the composition can comprise a first polycarbonate having a weight average molecular weight of 18,000 to 25,000 Daltons and a second polycarbonate having a weight average molecular weight of 27,000 to 35,000 Daltons.

Methods of forming polycarbonates are known, and many are commercially available from suppliers including SABIC Innovative Plastics, Bayer MaterialScience, and Mitsubishi Chemical Corp.

The aromatic polycarbonate is present in an amount of 25 to 75 weight percent, based on the total weight of polymers and flame retardants. Within this range, the aromatic polycarbonate amount can be 25 to 50 weight percent, specifically 25 to 35 weight percent.

In addition to the aromatic polycarbonate, the composition comprises a polycarbonate-polysiloxane block copolymer. A polycarbonate-polysiloxane block copolymer is a copolymer comprising at least one polycarbonate block and at least one polysiloxane block. In some embodiments, the polycarbonate-polysiloxane block copolymer comprises multiple polycarbonate blocks and multiple polysiloxane blocks. The polycarbonate-polysiloxane block copolymer can be transparent, translucent, or opaque, depending on its composition.

Polycarbonate-polysiloxane block copolymers and methods for their preparation are known and described, for example, in U.S. Patent Nos. 3,419,634 and 3,419,635 to Vaughn, 3,821,325 to Merritt et al., 3,832,419 to Merritt, and 6,072,011 to Hoover. Polycarbonate-polysiloxane block copolymers are also commercially available as LEXAN™ EXL Resins from SABIC Innovative Plastics.

In some embodiments, each of the at least one polysiloxane blocks of the copolymer comprises diorganosiloxane units of the formula 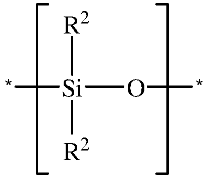 wherein each occurrence of R² is independently C₁₋₁₃ hydrocarbyl. Examples of suitable hydrocarbyl groups include C₁-C₁₃ alkyl (including alkyl groups that are linear, branched, cyclic, or a combination of at least two of the foregoing), C₂-C₁₃ alkenyl, C₆-C₁₂ aryl, C₇-C₁₃ arylalkyl, and C₇-C₁₃ alkylaryl. In some embodiments, including embodiments in which a transparent polycarbonate-polysiloxane block copolymer is desired, R² is unsubstituted by halogen.

The polysiloxane blocks can each comprise 2 to 1,000 diorganosiloxane units. Within this range, the number of diorganosiloxane units can be 2 to 500, more specifically 5 to 100. In some embodiments, the number of diorganosiloxane repeat units in each block is 10 to 75, specifically 40 to 60.

In some embodiments, the polysiloxane block has the formula 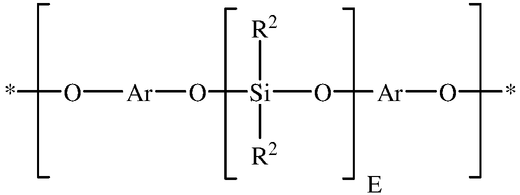 wherein R² is defined above; E is 2 to 1,000, specifically 2 to 500, more specifically 5 to 100, still more specifically 10 to 75, even more specifically 40 to 60; and each occurrence of Ar is independently an unsubstituted or substituted C₆-C₃₀ arylene group, wherein an aromatic carbon atom of the arylene group is directly bonded to each adjacent oxygen atom. Ar groups can be derived from a C₆-C₃₀ dihydroxyarylene compound, for example a dihydroxyarylene compound of formula 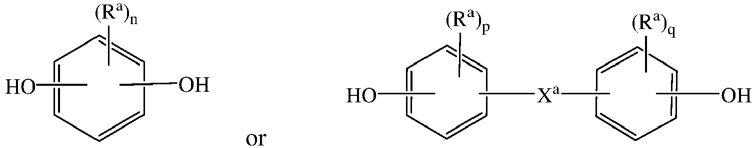 wherein R^{a}, X^{a}, n, p, and q are defined above. Examples of dihydroxyarylene compounds include hydroquinone, resorcinol, 1,1-bis(4-hydroxyphenyl)methane, 1,1-bis(4-hydroxyphenyl)ethane, 2,2-bis(4-hydroxyphenyl)propane (bisphenol A), 2,2-bis(4-hydroxyphenyl)butane, 2,2-bis(4-hydroxyphenyl)octane, 1,1-bis(4-hydroxyphenyl)propane, 1,1-bis(4-hydroxyphenyl)butane, 2,2-bis(4-hydroxy-1-methylphenyl)propane, 1,1-bis(4-hydroxyphenyl)cyclohexane, bis(4-hydroxyphenyl sulfide), and 1,1-bis(4-hydroxy-t-butylphenyl)propane.

In some embodiments, the polysiloxane block has the formula 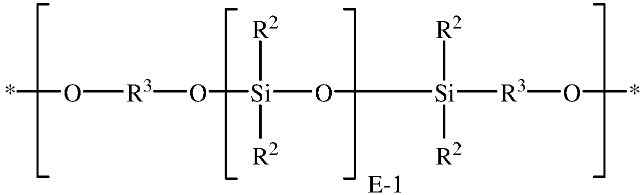 wherein R² and E are as defined above, and each occurrence of R³ is independently (divalent) C₁-C₃₀ hydrocarbylene.

In a specific embodiment, the polysiloxane blocks have the formula 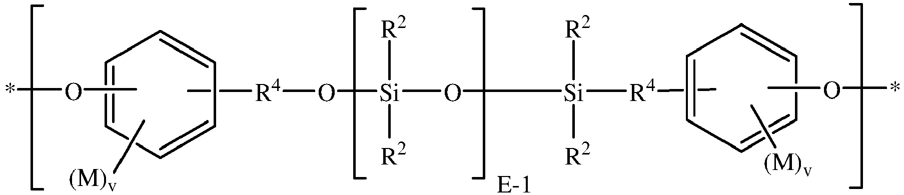 wherein R² and E are as defined above; each occurrence of R⁴ is independently a divalent C₂-C₈ aliphatic group; each occurrence of M is independently cyano, nitro, C₁-C₈ alkyl, C₁-C₈ alkoxyl, C₁-C₈ alkylthio, C₂-C₈ alkenyl, C₂-C₈ alkenyloxyl group, C₆-C₁₀ aryl, C₆-C₁₀ aryloxyl, C₇-C₁₂ arylalkyl, C₇-C₁₂ arylalkoxyl, C₇-C₁₂ alkylaryl, or C₇-C₁₂ alkylaryloxyl; and each occurrence of v is independently 0, 1, 2, 3, or 4. In some embodiments, at least one occurrence of v is not zero, and each associated occurrence of M is independently C₁-C₆ alkyl (including methyl, ethyl, and n-propyl), C₁-C₆ alkoxyl (including methoxyl, ethoxyl, and propoxyl), or C₆-C₁₂ aryl or alkylaryl (including phenyl and tolyl); each occurrence of R⁴ is independently C₂-C₄ alkylene (including dimethylene, trimethylene, and tetramethylene); and R² is C₁-C₈ alkyl, C₁-C₈ cyanoalkyl, or C₆-C₁₂ aryl or alkylaryl (including phenyl and tolyl). In some embodiments, each occurrence of R² is independently methyl or phenyl. In some embodiments, all the occurrences of R² collectively include at least one methyl. In some embodiments, the two occurrences of R² attached to a silicon atom include at least one methyl and at least one phenyl. In some embodiments, each occurrence of v is 1, each occurrence of M is methoxyl, R⁴ is a divalent C₁-C₃ alkylene group, and each occurrence of R² is methyl.

Blocks having the formula 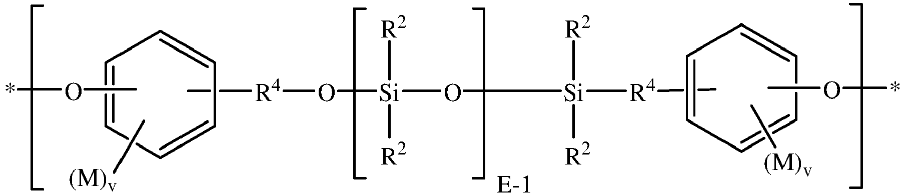 can be derived from the corresponding dihydroxy polysiloxane having the formula 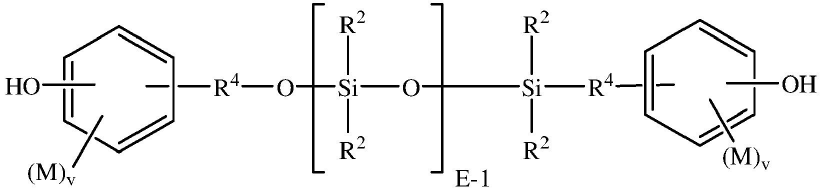 wherein E, v, R⁴, R⁶, and M are defined above. Such dihydroxy polysiloxanes can be prepared by a platinum-catalyzed reaction of an aliphatically unsaturated monohydric phenol with a polysiloxane hydride of the formula 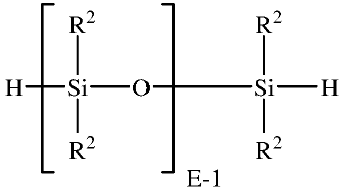 wherein E, and R² are defined above. Aliphatically unsaturated monohydric phenols can be selected from the group consisting of 2-methoxy-4-allylphenol (eugenol), 2-allylphenol, 2-methyl-4-allylphenol, 2-allyl-4-methylphenol, 4-allyl-2-phenylphenol, 4-allyl-2-bromophenol, 4-allyl-2-t-butoxyphenol, 4-allyl-2-phenylphenol, 2-allyl-4-propylphenol, 2-allyl-4,6-dimethylphenol, 2-allyl-4-bromo-6-methylphenol, 2-allyl-6-methoxy-4-methylphenol, 2-allyl-4,6-dimethylphenol, and combinations of at least two of the foregoing.

The at least one polycarbonate block of the polycarbonate-polysiloxane block copolymer comprises carbonate units of the formula 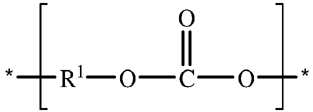 wherein at least 60 percent of the total number of R¹ groups are aromatic, and various specific embodiments of R¹ are described above.

In some embodiments, the polycarbonate-polysiloxane block copolymer comprises, based on the weight of the polycarbonate-polysiloxane block copolymer, 70 to 97 weight percent carbonate units and 3 to 30 weight percent of diorganosiloxane units. Within this range, the polycarbonate-polysiloxane block copolymer can comprise 70 to 90 weight percent, specifically 75 to 85 weight percent, of carbonate units, and 10 to 30 weight percent, specifically 15 to 25 weight percent of diorganosiloxane units.

In some embodiments, the polycarbonate-polysiloxane block copolymer has a weight average molecular weight of 2,000 to 100,000 Daltons, specifically 5,000 to 50,000 Daltons, as determined by gel permeation chromatography using a crosslinked styrene-divinyl benzene column, a sample concentration of 1 milligram per milliliter, and bisphenol A polycarbonate standards.

In some embodiments, the polycarbonate-polysiloxane block copolymer has a melt volume flow rate, measured at 300 °C and 1.2 kilogram load according to ASTM D1238-04, of 1 to 50 cubic centimeters per 10 minutes, specifically 2 to 30 cubic centimeters per 10 minutes, more specifically 3 to 20 cubic centimeters per 10 minutes. Mixtures of polycarbonate-polysiloxane block copolymers of different flow properties can be used to achieve desired flow properties for the composition as a whole.

In a very specific embodiment, the polycarbonate-polysiloxane block copolymer comprises, based on the weight of the polycarbonate-polysiloxane block copolymer, 10 to 30 weight percent of dimethylsiloxane units, and 70 to 90 weight percent of carbonate units of the formula 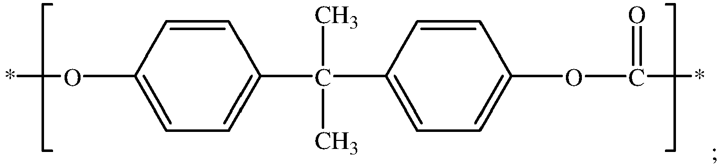 and the polycarbonate-polysiloxane block copolymer has a melt volume flow rate of 3 to 20 centimeter³/10 minutes measured at 300 °C and 1.2 kilogram load according to ASTM D1238-04. The carbonate units can be present in a single polycarbonate block, or distributed among multiple polycarbonate blocks. In some embodiments, the carbonate units are distributed among at least two polycarbonate blocks.

In another very specific embodiment, the polycarbonate-polysiloxane block copolymer has the formula 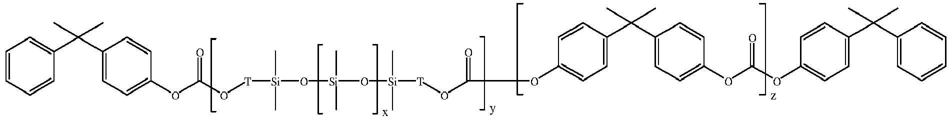 wherein x, y, and z are such that the block copolymer has 10 to 30 weight percent, specifically 15 to 25 weight percent, of polydimethylsiloxane units. In some embodiments, x is, on average, 30 to 60, specifically 30 to 56; y is on average 1 to 5, specifically 1 to 3; and z is on average 70 to 130, specifically 80 to 100. T is a divalent C₃-C₃₀ linking group, specifically a hydrocarbyl group which can be aliphatic, aromatic, or a combination of aromatic and aliphatic and can contain one or more heteroatoms including oxygen. A wide variety of linking groups and combinations of linking groups can be used. The T group can be derived from a eugenol or allyl end-capping agent on the polysiloxane chain. Other end-capping agents, in addition to eugenol, include aliphatically unsaturated monohydric phenols such as 2-allylphenol and 4-allyl-2-methylphenol. The carbonate units can be present in a single polycarbonate block, or distributed among multiple polycarbonate blocks. In some embodiments, the carbonate units are distributed among at least two polycarbonate blocks.

In another very specific embodiment, the polycarbonate-polysiloxane block copolymer has the formula 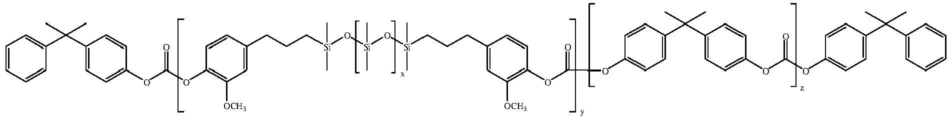 wherein x, y, and z are such that the block copolymer has 10 to 30 weight percent, specifically 15 to 25 weight percent, of polydimethylsiloxane units. In some embodiments, x is, on average, 30 to 60, specifically 30 to 56; y is on average 1 to 5, specifically 1 to 3; and z is on average 70 to 130, specifically 80 to 100. The carbonate units can be present in a single polycarbonate block, or distributed among multiple polycarbonate blocks. In some embodiments, the carbonate units are distributed among at least two polycarbonate blocks.

The composition comprises the polycarbonate-polysiloxane block copolymer in an amount of 10 to 40 weight percent, based on the total weight of polymers and flame retardants. Within this range, the polycarbonate-polysiloxane block copolymer amount can be 20 to 40 weight percent, specifically 30 to 40 weight percent.

In addition to the aromatic polycarbonate and the polycarbonate-polysiloxane block copolymer, the composition comprises a poly(alkylene terephthalate). The alkylene group of the poly(alkylene terephthalate) can comprise 2 to 18 carbon atoms. The alkylene groups can be selected from the group consisting of ethylene, 1,3-propylene, 1,4-butylene, 1,5-pentylene, 1,6-hexylene, 1,4-cyclohexylene, 1,4-cyclohexanedimethylene, and combinations thereof. In some embodiments, the alkylene group is selected from the group consisting of ethylene, 1,4-butylene, and combinations thereof, and the poly(alkylene terephthalate) is selected from the group consisting of poly(ethylene terephthalate), poly(butylene terephthalate), and combinations thereof. In some embodiments, the alkylene group comprises 1,4-butylene and the poly(alkylene terephthalate) comprises poly(butylene terephthalate). In some embodiments, the alkylene group comprises ethylene and the poly(alkylene terephthalate) comprises poly(ethylene terephthalate).

The poly(alkylene terephthalate) can also be a copolyester derived from terephthalic acid (or a combination of terephthalic acid and isophthalic acid) and a mixture comprising a linear C₂-C₆ aliphatic diol, such as ethylene glycol and/or 1,4-butylene glycol), and a C₆-C₁₂ cycloaliphatic diol, such as 1,4-cyclohexane diol, 1,4-cyclohexanedimethanol, dimethanol decalin, dimethanol bicyclooctane, 1,10-decane diol, or a combination thereof. The ester units comprising the two or more types of diols can be present in the polymer chain as individual units or as blocks of the same type of units. Specific esters of this type include poly(1,4-cyclohexylene dimethylene co-ethylene terephthalate) (PCTG) wherein greater than 50 mole percent of the ester groups are derived from 1,4-cyclohexanedimethanol; and poly(ethylene-co-1,4-cyclohexylenedimethylene terephthalate) wherein greater than 50 mole percent of the ester groups are derived from ethylene (PETG).

It will be understood that the poly(alkylene terephthalate) can include small amounts (e.g., up to 10 weight percent, specifically up to 5 weight percent) of residues of monomers other than alkylene diols and terephthalic acid. For example, the poly(alkylene terephthalate) can include the residue of isophthalic acid. As another example, the poly(alkylene terephthalate) can be selected from the group consisting of units derived from an aliphatic acid, such as succinic acid, glutaric acid, adipic acid, pimelic acid, 1,4-cyclohexanedicarboxylic acid, and combinations thereof.

In some embodiments, the poly(alkylene terephthalate) comprises poly(1,4-butylene terephthalate) or "PBT" resin that is obtained by polymerizing a glycol component comprising at least 70 mole percent, specifically at least 80 mole percent, of tetramethylene glycol (1,4-butanediol), and an acid component comprising at least 70 mole percent, specifically at least 80 mole percent, terephthalic acid or polyester-forming derivatives thereof. Commercial examples of PBT include those available under the trade names VALOX™ 315 Resin and VALOX™ 195 Resin, manufactured by SABIC Innovative Plastics.

In some embodiments, the poly(alkylene terephthalate) has an intrinsic viscosity of 0.4 to 2 deciliter/gram (dl/g), as measured in a 60:40 phenol/tetrachloroethane mixture at 23 °C. In some embodiments, the poly(alkylene terephthalate) has an intrinsic viscosity of 0.5 to 1.5 dl/g.

The composition comprises the poly(alkylene terephthalate) in an amount of 10 to 30 weight percent, based on the total weight of polymers and flame retardants. Within this range, the poly(alkylene terephthalate) amount can be 15 to 30 weight percent, specifically 15 to 25 weight percent.

In addition to the aromatic polycarbonate, the polycarbonate-polysiloxane block copolymer, and the poly(alkylene terephthalate), the composition comprises a flame retardant. The flame retardant comprises an oligomeric or polymeric bis(aryloxy)phosphazene in combination with one or both of an organophosphine oxide and an oligomeric or polymeric aromatic phosphonate.

The bis(phenoxy)phosphazene can be oligomeric or polymeric, and it can be cyclic or linear. In some embodiments, the bis(phenoxy)phosphazene is cyclic and has the structure 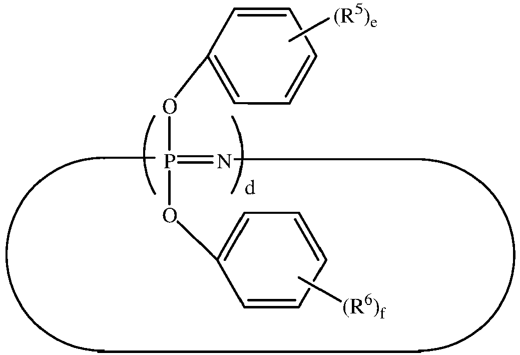 wherein d is an integer of 3 to 25; e and f are each independently 0, 1, 2, 3, 4, or 5; and each occurrence of R⁵ and R⁶ is independently C₁-C₁₂ alkyl, or C₁-C₁₂ alkoxyl.

In other embodiments, the bis(phenoxy)phosphazene is linear and has the structure 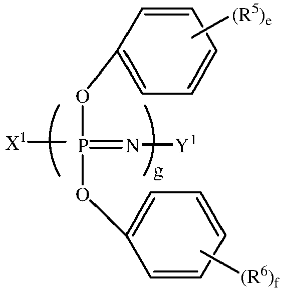 wherein g is an integer from 3 to 10,000; X¹ represents a -N=P(OPh)₃ group or a -N=P(O)(OPh) group wherein Ph represents a phenyl group; Y¹ represents a -P(OPh)₄ group or a -P(O)(OPh)₂ group; e and f are each independently 0, 1, 2, 3, 4, or 5; and each occurrence of R⁵ and R⁶ is independently C₁-C₁₂ alkyl, or C₁-C₁₂ alkoxyl.

Commercially available oligomeric and polymeric bis(phenoxy)phosphazenes include LY202 from Lanyin Chemical Co., Ltd., FP-110 from Fushimi Pharmaceutical Co., Ltd., and SPB-100 from Otsuka Chemical Co., Ltd.

The organophosphine oxide has the formula 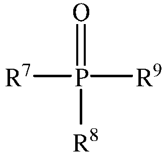 wherein R⁷, R⁸, and R⁹ are each independently C₄-C₂₄ hydrocarbyl. The C₄-C₂₄ hydrocarbyl can be, for example, C₄-C₂₄ alkyl, C₆-C₂₄ aryl, C₇-C₂₄ alkylaryl, or C₇-C₂₄ arylalkyl. The organophosphine oxide can be selected from the group consisting of triphenylphosphine oxide, tri-p-tolyl-phosphine oxide, tris(4-nonylphenyl)phosphine oxide, tricyclohexylphosphine oxide, tri-n-butylphosphine oxide, tri-n-hexylphosphine oxide, tri-n-octylphosphine oxide, benzyl bis(cyclohexyl)phosphine oxide, benzyl bis(phenyl)phosphine oxide, phenyl bis(n-hexyl)phosphine oxide, and combinations thereof. In some embodiments, the organophosphine oxide comprises triphenylphosphine oxide.

The aromatic phosphonate can be oligomeric or polymeric and comprise repeat units having the structure 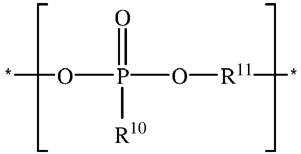 wherein R¹⁰ is independently in each repeat unit C₁-C₁₂ hydrocarbyl, and R¹¹ is independently in each repeat unit an unsubstituted or substituted C₆-C₁₈ divalent aromatic group. In some embodiments, R¹⁰ is methyl in each repeat unit, and R¹¹ is independently in each repeat unit

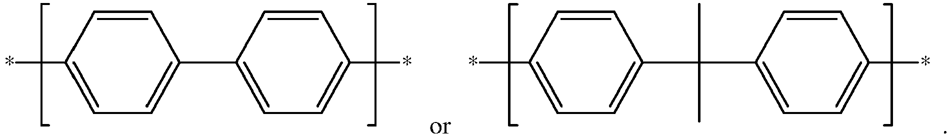

In some embodiments, the oligomeric or polymeric phosphonate is the reaction product of bisphenol A and methyl diphenyl phosphonate, which react stoichiometrically to form methyl p-cumylphenyl phosphonate repeat units, corresponding to the repeat unit above in which R¹⁰ is methyl and R¹¹ is

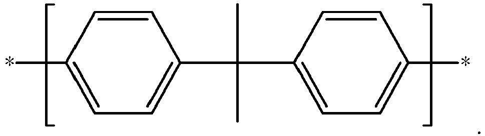

The preparations of oligomeric and polymeric phosphonates are described in U.S. Patent Nos. 7,816,486 and 7,560,525 to Freitag et al. An oligomeric phosphonate is commercially available as FRX™ 100 from FRX Polymers, Inc., Chelmsford, Massachusetts.

In some embodiments, the flame retardant comprises the oligomeric or polymeric bis(aryloxy)phosphazene, and the oligomeric or polymeric aromatic phosphonate. In some embodiments, the flame retardant comprises bis(phenoxyphosphazene) oligomer and methyl p-cumylphenyl phosphonate oligomer.

In some embodiments, the flame retardant comprises the organophosphine oxide. In some of these embodiments, the organophosphine oxide is triphenylphosphine oxide.

The total flame retardant content is 5 to 20 weight percent, specifically 5 to 15 weight percent, more specifically 8 to 12 weight percent, based on the total weight of polymers and flame retardants. The content of the oligomeric or polymeric bis(aryloxy)phosphazene is 2 to 18 weight percent, specifically 2 to 10 weight percent, more specifically 2 to 7 weight percent, based on the total weight of polymers and flame retardants. The content of the organophosphine oxide, the oligomeric or polymeric aromatic phosphonate, or the combination thereof is 2 to 18 weight percent, specifically 2 to 10 weight percent, more specifically 3 to 9 weight percent, based on the total weight of polymers and flame retardants.

In addition to the aromatic polycarbonate, the polycarbonate-polysiloxane block copolymer, the poly(alkylene terephthalate), and the flame retardant, the composition comprises a drip retardant. In some embodiments, the drip retardant is selected from the group consisting of organophilic cation-modified clays (as described, for example, in U.S. Patent No. 3,516,959 to Moore), bis(cyclic carbonate)s (as described, for example, in U.S. Patent No. 4,579,896 to Rosenquist), aromatic dicyanate esters (as described, for example, in U.S. Patent No. 5,250,635 to Powell et al.), calcium titanate, polytetrafluoroethylene, poly(styrene-acrylonitrile)-encapsulated tetrafluoroethylene, and combinations thereof. In some embodiments, the drip retardant comprises poly(styrene-acrylonitrile)-encapsulated tetrafluoroethylene.

The composition comprises the drip retardant in an amount of 0.05 to 5 weight percent, based on the total weight of polymers and flame retardants. Within this range, the drip retardant amount can be 0.2 to 3 weight percent, specifically 0.4 to 2 weight percent, more specifically 0.5 to 1.5 weight percent.

The composition can, optionally, further comprise an impact modifier. The impact modifier can be selected from the group consisting of methyl methacrylate-butadiene-styrene copolymers, acrylonitrile-butadiene-styrene copolymers, methacrylate-butadiene copolymers, acrylonitrile-styrene-butyl acrylate copolymers, methyl methacrylate-acrylonitrile-butadiene-styrene copolymers, acrylonitrile-ethylene-propylene-diene-styrene copolymers, and combinations thereof. In some embodiments, the impact modifier comprises a methyl methacrylate-butadiene-styrene copolymer.

The composition can, optionally, include one or more additives in addition to the flame retardant. The additive can be selected from the group consisting of flow modifiers, antioxidants, heat stabilizers, plasticizers, lubricants, mold release agents, antistatic agents, anti-fog agents, antimicrobial agents, radiation stabilizers, and combinations thereof. In general, the additives, when present, are used in a total amount of less than or equal to 5 weight percent, based on the total weight of polymers and flame retardants. Within this limit, the additives can be used in a total amount of less than or equal to 2 weight percent, specifically less than or equal to 1.5 weight percent, more specifically less than or equal to 1 weight percent.

In a very specific embodiment of the composition, the aromatic polycarbonate comprises a bisphenol A polycarbonate and a poly(2-phenyl-3,3-bis(4-hydroxyphenyl)phthalimidine)-poly(bisphenol A) copolycarbonate; the poly(alkylene terephthalate) comprises polyethylene terephthalate; the flame retardant comprises a bis(phenoxy)phosphazene oligomer and a methyl p-cumylphenyl phosphonate oligomer; the drip retardant comprises poly(styrene-acrylonitrile)-encapsulated polytetrafluoroethylene; and the composition comprises 25 to 35 weight percent of the aromatic polycarbonate, 30 to 40 weight percent of the polycarbonate-polysiloxane block copolymer, 15 to 25 weight percent of the poly(alkylene terephthalate), 5 to 15 weight percent of the flame retardant, 2 to 7 weight percent of the bis(phenoxy)phosphazene oligomer, 3 to 9 weight percent of the methyl p-cumylphenyl phosphonate oligomer, and 0.5 to 1.5 weight percent of the drip retardant.

Another embodiment is an article comprising a composition comprising, based on the total weight of polymers and flame retardants, 25 to 75 weight percent of an aromatic polycarbonate; 10 to 40 weight percent of a polycarbonate-polysiloxane block copolymer; 10 to 30 weight percent of a poly(alkylene terephthalate); 5 to 20 weight percent of a flame retardant comprising 2 to 18 weight percent of an oligomeric or polymeric bis(aryloxy)phosphazene, and 2 to 18 weight percent of an organophosphine oxide, an oligomeric or polymeric aromatic phosphonate, or a combination thereof; and 0.05 to 5 weight percent of a drip retardant.

Articles that can be fabricated from the composition include, for example, consumer electronic components, automotive components, mass transportation components, medical device components, electrical components, and lighting components.

All of the compositional variations described above apply as well to the article comprising the composition.

In a very specific embodiment of the article, the aromatic polycarbonate comprises a bisphenol A polycarbonate and a poly(2-phenyl-3,3-bis(4-hydroxyphenyl)phthalimidine)-poly(bisphenol A) copolycarbonate; the poly(alkylene terephthalate) comprises polyethylene terephthalate; the flame retardant comprises a bis(phenoxy)phosphazene oligomer and a methyl p-cumylphenyl phosphonate oligomer; the drip retardant comprises poly(styrene-acrylonitrile)-encapsulated polytetrafluoroethylene; and the composition comprises 25 to 35 weight percent of the aromatic polycarbonate, 30 to 40 weight percent of the polycarbonate-polysiloxane block copolymer, 15 to 25 weight percent of the poly(alkylene terephthalate), 5 to 15 weight percent of the flame retardant, 2 to 7 weight percent of the bis(phenoxy)phosphazene oligomer, 3 to 9 weight percent of the methyl p-cumylphenyl phosphonate oligomer, and 0.5 to 1.5 weight percent of the drip retardant.

The invention includes at least the following embodiments.
Embodiment 1: A composition comprising, based on the total weight of polymers and flame retardants, 25 to 75 weight percent of an aromatic polycarbonate; 10 to 40 weight percent of a polycarbonate-polysiloxane block copolymer; 10 to 30 weight percent of a poly(alkylene terephthalate); and 5 to 20 weight percent of a flame retardant comprising 2 to 18 weight percent of an oligomeric or polymeric bis(aryloxy)phosphazene; and 2 to 18 weight percent of an organophosphine oxide, an oligomeric or polymeric aromatic phosphonate, or a combination thereof; and 0.05 to 5 weight percent of a drip retardant.
Embodiment 2: The composition of embodiment 1, wherein the aromatic polycarbonate comprises repeat units having the formula 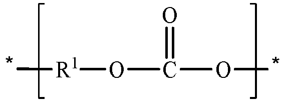 wherein at least 60 percent of the total number of R¹ groups are aromatic.
Embodiment 3: The composition of embodiment 2, wherein at least 90 percent of the total number of R¹ groups have the formula 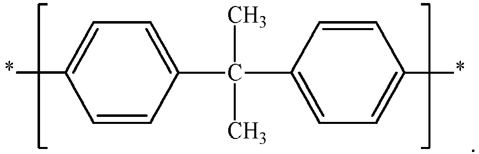
Embodiment 4: The composition of embodiment 1, wherein the aromatic polycarbonate comprises a copolycarbonate, wherein the copolycarbonate is a copolymer of bisphenol A and a second monomer having a structure represented by the formula 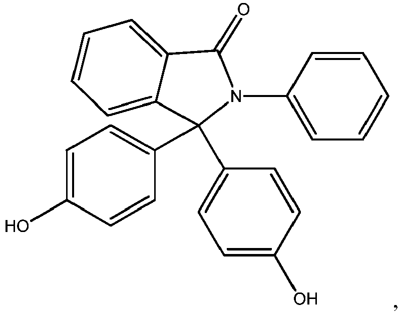 wherein the second monomer is present in an amount of 25 to 40 mole percent; and wherein the copolycarbonate has a weight average molecular weight of 15,000 to 35,000 Daltons.
Embodiment 5: The composition of any one of embodiments 1-4, wherein the polycarbonate-polysiloxane block copolymer comprises a polysiloxane block comprising repeating units having the formula 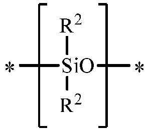 wherein each R² is independently a C₁₋₁₃ monovalent organic group; and wherein the polycarbonate-polysiloxane block copolymer comprises 10 to 25 weight percent of the polysiloxane block.
Embodiment 6: The composition of any one of embodiments 1-5, wherein the poly(alkylene terephthalate) comprises alkylene groups selected from the group consisting of ethylene, 1,3-propylene, 1,4-butylene, 1,5-pentylene, 1,6-hexylene, 1,4-cyclohexylene, 1,4-cyclohexanedimethylene, and combinations thereof.
Embodiment 7: The composition of any one of embodiments 1-6, wherein the poly(alkylene terephthalate) is selected from the group consisting of poly(ethylene terephthalate)s, poly(butylene terephthalate)s, and combinations thereof.
Embodiment 8: The composition of any one of embodiments 1-7, wherein the poly(alkylene terephthalate) comprises poly(butylene terephthalate).
Embodiment 9: The composition of any one of embodiments 1-7, wherein the poly(alkylene terephthalate) comprises poly(ethylene terephthalate).
Embodiment 10: The composition of any one of embodiments 1-9, wherein the flame retardant comprises the oligomeric or polymeric bis(aryloxy)phosphazene, and the oligomeric or polymeric aromatic phosphonate.
Embodiment 11: The composition of any one of embodiments 1-10, comprising the organophosphine oxide; wherein the organophosphine oxide is triphenylphosphine oxide.
Embodiment 12: The composition of any one of embodiments 1-11, comprising the oligomeric or polymeric aromatic phosphonate; wherein the oligomeric or polymeric aromatic phosphonate is methyl p-cumylphenyl phosphonate oligomer.
Embodiment 13: The composition of any one of embodiments 1-12, further comprising 1 to 10 weight percent of an impact modifier.
Embodiment 14: The composition of embodiment 13, wherein the impact modifier is selected from the group consisting of methyl methacrylate-butadiene-styrene copolymers, acrylonitrile-butadiene-styrene copolymers, methacrylate-butadiene copolymers, acrylonitrile-styrene-butyl acrylate copolymers, methyl methacrylate-acrylonitrile-butadiene-styrene copolymers, acrylonitrile-ethylene-propylene-diene-styrene copolymers, and combinations thereof.
Embodiment 15: The composition of embodiment 13, wherein the impact modifier comprises a methyl methacrylate-butadiene-styrene copolymer.
Embodiment 16: The composition of embodiment 1, wherein the aromatic polycarbonate comprises a bisphenol A polycarbonate and a poly(2-phenyl-3,3-bis(4-hydroxyphenyl)phthalimidine)-poly(bisphenol A) copolycarbonate; wherein the poly(alkylene terephthalate) comprises polyethylene terephthalate; wherein the flame retardant comprises a bis(phenoxy)phosphazene oligomer and a methyl p-cumylphenyl phosphonate oligomer; and wherein the composition comprises 25 to 35 weight percent of the aromatic polycarbonate, 30 to 40 weight percent of the polycarbonate-polysiloxane block copolymer, 15 to 25 weight percent of the poly(alkylene terephthalate), 5 to 15 weight percent of the flame retardant, 2 to 7 weight percent of the bis(phenoxy)phosphazene oligomer, and 3 to 9 weight percent of the methyl p-cumylphenyl phosphonate oligomer.
Embodiment 17: An article comprising a composition comprising, based on the total weight of polymers and flame retardants, 25 to 75 weight percent of an aromatic polycarbonate; 10 to 40 weight percent of a polycarbonate-polysiloxane block copolymer; 10 to 30 weight percent of a poly(alkylene terephthalate); and 5 to 20 weight percent of a flame retardant comprising 2 to 18 weight percent of an oligomeric or polymeric bis(aryloxy)phosphazene, and 2 to 18 weight percent of an organophosphine oxide, an oligomeric or polymeric aromatic phosphonate, or a combination thereof.
Embodiment 18: The article of embodiment 17, wherein the article is a consumer electronic component, an automotive component, a mass transportation component, a medical device component, an electrical component, or a lighting component.
Embodiment 19: The article of embodiment 17 or 18, wherein the aromatic polycarbonate comprises a bisphenol A polycarbonate and a poly(2-phenyl-3,3-bis(4-hydroxyphenyl)phthalimidine)-poly(bisphenol A) copolycarbonate; wherein the poly(alkylene terephthalate) comprises polyethylene terephthalate; wherein the flame retardant comprises a bis(phenoxy)phosphazene oligomer and a methyl p-cumylphenyl phosphonate oligomer; and wherein the composition comprises 25 to 35 weight percent of the aromatic polycarbonate, 30 to 40 weight percent of the polycarbonate-polysiloxane block copolymer, 15 to 25 weight percent of the poly(alkylene terephthalate), 5 to 15 weight percent of the flame retardant, 2 to 7 weight percent of the bis(phenoxy)phosphazene oligomer, and 3 to 9 weight percent of the methyl p-cumylphenyl phosphonate oligomer.

All ranges disclosed herein are inclusive of the endpoints, and the endpoints are independently combinable with each other. Each range disclosed herein constitutes a disclosure of any point or sub-range lying within the disclosed range.

The invention is further illustrated by the following non-limiting examples.

### EXAMPLES

Components used to prepare compositions are summarized in Table 1.

**Table 1**

| Component | Description |
|---|---|
| BPA-PC | Polycarbonate derived from bisphenol A, CAS Reg. No 111211-39-3, having a weight average molecular weight of 36,500 Daltons, as determined by gel permeation chromatography using polycarbonate standards; obtained as LEXAN™ ML4535 Resin from Sabic Innovative Plastics. |
| EXL-PC | Poly(bisphenol A carbonate)-polydimethylsiloxane block copolymer, CAS Reg. No. 202483-49-6, having a polydimethylsiloxane content of about 20 weight percent, an average of about 45 siloxane repeat units per polydimethylsiloxane block, a melt volume flow rate of about 6 centimeters per 10 minutes measured at 300°C and 1.2 kilogram load according to ASTM D1238-04, a weight average molecular weight of about 30,000 Daltons, and being opaque in bulk form; obtained as LEXAN ™ C9030P Resin from Sabic Innovative Plastics. |
| XHT-PC | p-Cumylphenol-terminated poly(2-phenyl-3,3-bis(4-hydroxyphenyl)phthalimidine)-poly(bisphenol A) (PPPBP/BPA) copolycarbonate, CAS Reg. No. 503834-43-3, having 35 mole percent PPPBP, a weight average molecular weight of 25,000 daltons, as determined by gel permeation chromatography using polycarbonate standards; preparable by the procedure of U.S. Patent Application Publication No. 2014/234629 A1 of Sun et al., page 30, Example 2. |
| PBT | Poly(1,4-butylene terephthalate), CAS Reg. No. 26062-94-2, having an intrinsic viscosity of 1.3 ± 0.02 deciliter per gram, measured at 23°C in 60:40 weight/weight phenol/tetrachloroethane; obtained as PBT 1100-211X Resin from Chang Chun Plastics Co., Ltd. |
| PET | Polyethylene terephthalate, CAS Reg. No. 25038-59-9, having an intrinsic viscosity of 0.80-0.86 deciliter per gram, measured at 23 °C in 60:40 phenol/tetrachloroethane; obtained as Foshan BG-03-80 from Foshan Shunde Shunyan Plastic Co., Ltd. |
| MBS | Methyl methacrylate-butadiene-styrene copolymer, CAS Reg. No. 25053-09-2; obtained as PARALOID™ EXL 2650A from Dow Chemical. |
| Phosphazene | Bis(phenoxy)phosphazene oligomer, CAS Reg. No. 28212-48-8; obtained as SPB-100 from Otsuka. |
| TPPO | Triphenylphosphine oxide, CAS Reg. No. 791-28-6; obtained from Shanghai Changgen Chemical Technology Co., Ltd. |
| FRX100 | Oligomer of methyl diphenyl phosphonate and bisphenol A, CAS Reg. No. 68664-06-2; obtained as NOFIA™ HM1100 from FRX Polymers. |
| TSAN | Poly(acrylonitrile-styrene)-encapsulated polytetrafluoroethylene, CAS Reg. No. 9002-84-0, having 50 weight percent polytetrafluoroethylene; obtained as CYCOLAC™ INP449 Resin from Sabic Innovative Plastics. |
| Quencher | Zinc dihydrogen phosphate (Zn(H₂PO₄)₂), CAS Reg. No. 13598-37-3; obtained as Z 21-82 from Budenheim Iberica. |
| Antioxidant | Tetrakis(methylene(3,5-di-tert-butyl-4-hydroxy-hydrocinnamate)methane, CAS Reg. No. 6683-19-8; obtained as IRGANOX™ 1010 from BASF Performance Chemicals Co., Ltd. |
| UVA | 2-(2'-hydroxy-5-t-octylphenyl) benzotriazole, CAS Reg. No. 3147-75-9; obtained as CYASORB™ UV 5411 from CYTEC. |

To prepare the compositions, all the ingredients were pre-blended, then added to the feed throat of a twin-screw extruder. The composition was melt-kneaded using a throughput of 45 kilograms per hour and zone temperatures of 120 °C / 250 °C / 250 °C / 250 °C / 250 °C / 250 °C / 260 °C / 260 °C / 260 °C / 270 °C / 200 °C from feed throat to die. Four millimeter strands were extruded through the die and cooled in a water bath prior to pelletizing. Pellets were dried at 120°C for 4 hours prior to use for injection molding.

Test specimens were injection molded in accordance with corresponding ASTM methods using a 150 ton injection molding machine operating at a melt temperature of 250°C, a mold temperature of 80°C, and a back pressure of 30 kilograms-force per centimeter².

Properties were determined using the procedures and conditions summarized in Table 2, where "MFR" is melt flow rate, "MAI" is multiaxial impact (dynatup impact), "kg" is kilograms, "mm" is millimeters, "min" is minutes, "g" is grams, "J" is joules, "m" is meters, and "MPa" is megapascals.

In Table 2, "UL 94" refers to the 20 millimeter vertical burn test of Underwriter's Laboratory Bulletin 94, "Tests for Flammability of Plastic Materials, UL 94", 20 mm Vertical Burning Flame Test. Before testing, flame bars having a thickness of 1.2 or 1.5 millimeters were conditioned at 23°C and 50% relative humidity for at least 48 hours. In the UL 94 20 mm Vertical Burning Flame Test, a set of five flame bars was tested. For each bar, a flame was applied to the bar then removed, and the time required for the bar to self-extinguish (first afterflame time, t1) was noted. The flame was then reapplied and removed, and the time required for the bar to self-extinguish (second afterflame time, t2) and the post-flame glowing time (afterglow time, t3) were noted. To achieve a rating of V-0, the afterflame times t1 and t2 for each individual specimen must have been less than or equal to 10 seconds; and the total after flame time for all five specimens (t1 plus t2 for all five specimens) must have been less than or equal to 50 seconds; and the second afterflame time plus the afterglow time for each individual specimen (t2 + t3) must have been less than or equal to 30 seconds; and no specimen can have flamed or glowed up to the holding clamp; and the cotton indicator cannot have been ignited by flaming particles or drops. To achieve a rating of V-1, the afterflame times t1 and t2 for each individual specimen must have been less than or equal to 30 seconds; and the total afterflame time for all five specimens (t1 plus t2 for all five specimens) must have been less than or equal to 250 seconds; and the second afterflame time plus the afterglow time for each individual specimen (t2 + t3) must have been less than or equal to 60 seconds; and no specimen can have flamed or glowed up to the holding clamp; and the cotton indicator cannot have been ignited by flaming particles or drops. To achieve a rating of V-2, the afterflame times t1 and t2 for each individual specimen must have been less than or equal to 30 seconds; and the total afterflame time for all five specimens (t1 plus t2 for all five specimens) must have been less than or equal to 250 seconds; and the second afterflame time plus the afterglow time for each individual specimen (t2 + t3) must have been less than or equal to 60 seconds; and no specimen can have flamed or glowed up to the holding clamp; but the cotton indicator can have been ignited by flaming particles or drops. Compositions not achieving a rating of V-2 were considered to have failed.

In Table 2, the Ball Pressure Test was used to determine dimensional stability under stress at elevated temperature. It can be used to test the performance of plastic insulating materials that are used in, for example, electrical appliances, wiring accessories, lights, motors, and connectors. Compositions passing the Ball Pressure Test are compositions having a ball indentation of 2 millimeters or less at the tested temperature.

**Table 2**

| Property | Standard | Conditions | Specimen Type | Units |
|---|---|---|---|---|
| MFR | ASTM D1238-13 | 265°C,5kg | Granule | g/10 minutes |
| Notched Izod | ASTM D256-10 | 23 °C, 3.2 mm | Bar - 63.5 × 12.7 × 3.2 mm | J/m |
| MAI | ASTM D3763-10 | -30 °C, 3.2 mm | Disk -100mm dia. × 3.2mm | Ductility % |
| Tensile | ASTM D638-10 | 50mm/min | Tensile Type I Bar | MPa |
| Vicat Temp. | ASTM 1525-09 | 50 N, 120°C/hour | Bar - 63.5 × 12.7 × 3.2 mm | °C |
| Ball Pressure Test | IEC 60695-10-2 | 20 N, 125°C | Chip- 90.5 × 50.0 × 3.2 mm | Pass/Fail |
| Flame Retardancy | UL 94 | 1.5 mm | Bar-127 × 12.7 × 1.5 mm | V-0, V-1, V-2 |
| Flame Retardancy | UL 94 | 1.2 mm | Bar -127 × 12.7 × 1.2 mm | V-0, V-1, V-2 |

Compositions and properties are summarized in Table 3, where component amounts are expressed in weight percent based on the total of polymers and flame retardants. In these compositions, the polymers are BPA-PC, EXL-PC, XHT-PC, PBT, PET, MBS, TSAN, phosphazene (also a flame retardant), and FRX100 (also a flame retardant). The flame retardants are phosphazene, TPPO, and FRX100. Conversely, the components Quencher, Antioxidant, and UVA are not included in the weight basis for weight percent calculations.

As illustrated by Comparative Examples 1 to 3, polycarbonate compositions having a fixed polyester content of 25.14 weight percent cannot achieve good flame retardancy and mechanical properties using a phosphazene, triphenylphosphine oxide, or oligomeric or polymeric aromatic phosphonate alone. For example, a desirable impact strength of 734 joules/meter was obtained for Comparative Example 1, but the composition only achieved V-1 ratings at both 1.5 and 1.2 millimeter thicknesses. Comparative Examples 2 and 3 both achieved a V-0 rating at a thickness of 1.5 millimeters, however the impact strength was relatively low at 64 and 128 joules/meter, respectively. When a methacrylate-butadiene-styrene (MBS) core-shell impact modifier is included in the composition, as illustrated by Comparative Examples 4 and 5, an appropriate balance of heat and impact resistance cannot be obtained when using a phosphazene or oligomeric or polymeric aromatic phosphonate alone. For example, the compositions of Comparative Examples 4 and 5 achieved only a rating of V-1 at a sample thickness of 1.2 millimeters. The compositions of inventive Examples 1 and 2, however, include a flame retardant composition comprising a combination of additives, for example, an oligomeric bis(phenoxy)phosphazene and triphenylphosphine oxide (inventive Example 1) or an oligomeric or polymeric aromatic phosphonate (inventive Example 2). Examples 1 and 2 demonstrate the combination of these additives allows for compositions having high impact strength (Notched Izod impact > 500 joules/meter), good heat resistance (Vicat > 100°C), and good flame retardancy (V-0 rating at thicknesses of 1.5 and 1.2 millimeters). The composition of inventive Example 3, which incorporates a PPPBP/BPA copolycarbonate and a methyl methacrylate-butadiene-styrene (MBS) core-shell impact modifier, demonstrated a further improvement in mechanical properties without sacrificing flame retardancy.

Comparative Example 6 illustrates the effect of the polycarbonate-polysiloxane block copolymer component. In the absence of the polycarbonate-polysiloxane block copolymer, the impact strength is significantly reduced at 65 joules/meter (compare to 526 joules/meter for inventive Example 1). The composition of Comparative Example 6 also exhibits poor flame retardancy, and was unable to achieve a V-0 rating at thicknesses of 1.5 and 1.2 millimeters.

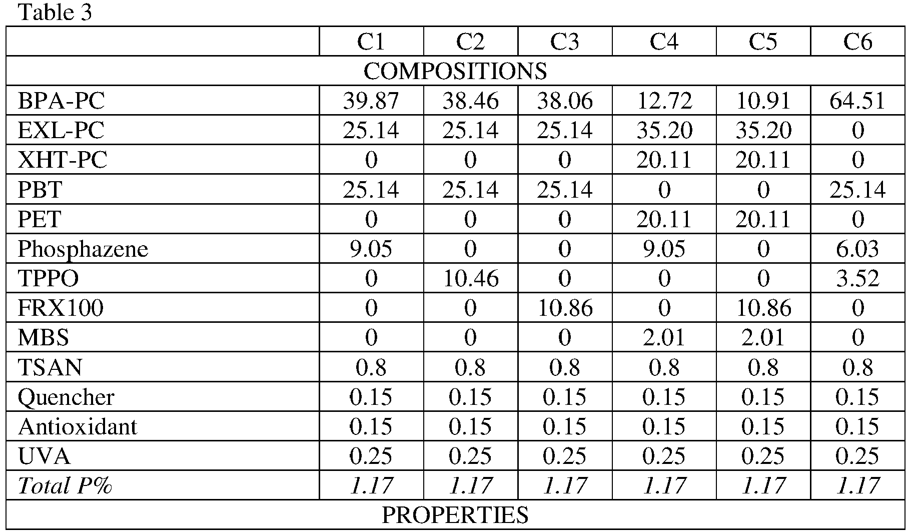

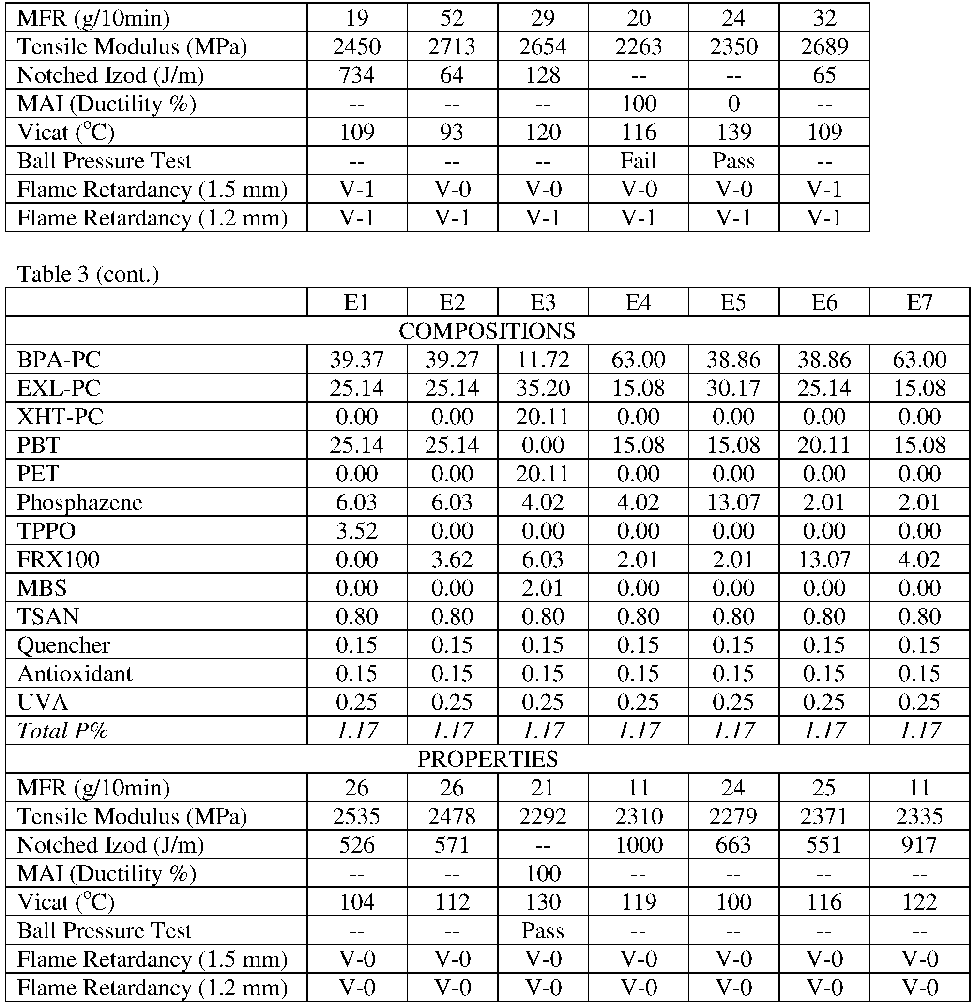

## Claims

1. A composition comprising, based on the total weight of polymers and flame retardants,
25 to 75 weight percent of an aromatic polycarbonate;
10 to 40 weight percent of a polycarbonate-polysiloxane block copolymer;
10 to 30 weight percent of a poly (alkylene terephthalate);
5 to 20 weight percent of a flame retardant comprising
2 to 18 weight percent of an oligomeric or polymeric bis(aryloxy)phosphazene; and
2 to 18 weight percent of an organophosphine oxide, an oligomeric or polymeric aromatic phosphonate, or a combination thereof; and
0.05 to 5 weight percent of a drip retardant.

2. The composition of claim 1, wherein the aromatic polycarbonate comprises repeat units having the formula 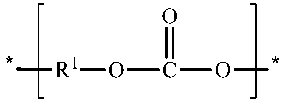 wherein at least 60 percent of the total number of R¹ groups are aromatic.

3. The composition of claim 2, wherein at least 90 percent of the total number of R¹ groups have the formula

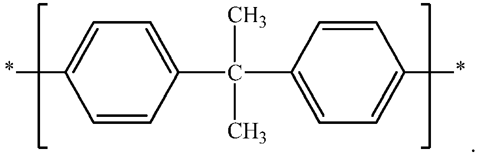

4. The composition of claim 1, wherein the aromatic polycarbonate comprises a copolycarbonate, wherein the copolycarbonate is a copolymer of bisphenol A and a second monomer having a structure represented by the formula 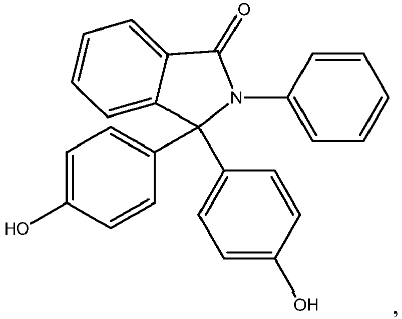
wherein the second monomer is present in an amount of 25 to 40 mole percent; and
wherein the copolycarbonate has a weight average molecular weight of 15,000 to 35,000 Daltons as measured by gel permeation chromatography using polycarbonate standards.

5. The composition of any one of claims 1-4, wherein the polycarbonate-polysiloxane block copolymer comprises a polysiloxane block comprising repeating units having the formula 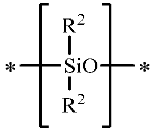
wherein each R² is independently a C₁₋₁₃ monovalent organic group; and
wherein the polycarbonate-polysiloxane block copolymer comprises 10 to 25 weight percent of the polysiloxane block.

6. The composition of any one of claims 1-5, wherein the poly(alkylene terephthalate) comprises alkylene groups selected from the group consisting of ethylene, 1,3-propylene, 1,4-butylene, 1,5-pentylene, 1,6-hexylene, 1,4-cyclohexylene, 1,4-cyclohexanedimethylene, and combinations thereof.

7. The composition of any one of claims 1-6, wherein the poly(alkylene terephthalate) comprises poly(butylene terephthalate).

8. The composition of any one of claims 1-6, wherein the poly(alkylene terephthalate) comprises poly(ethylene terephthalate).

9. The composition of any one of claims 1-8, wherein the flame retardant comprises the oligomeric or polymeric bis(aryloxy)phosphazene, and the oligomeric or polymeric aromatic phosphonate.

10. The composition of any one of claims 1-9, comprising the organophosphine oxide; wherein the organophosphine oxide is triphenylphosphine oxide.

11. The composition of any one of claims 1-10, comprising the oligomeric or polymeric aromatic phosphonate; wherein the oligomeric or polymeric aromatic phosphonate is methyl p-cumylphenyl phosphonate oligomer.

12. The composition of claim 1,
wherein the aromatic polycarbonate comprises a bisphenol A polycarbonate and a poly(2-phenyl-3,3-bis(4-hydroxyphenyl)phthalimidine)-poly(bisphenol A) copolycarbonate;
wherein the poly(alkylene terephthalate) comprises polyethylene terephthalate;
wherein the flame retardant comprises a bis(phenoxy)phosphazene oligomer and a methyl p-cumylphenyl phosphonate oligomer;
wherein the drip retardant comprises poly(styrene-acrylonitrile)-encapsulated polytetrafluoroethylene; and
wherein the composition comprises
25 to 35 weight percent of the aromatic polycarbonate,
30 to 40 weight percent of the polycarbonate-polysiloxane block copolymer,
15 to 25 weight percent of the poly(alkylene terephthalate),
5 to 15 weight percent of the flame retardant,
2 to 7 weight percent of the bis(phenoxy)phosphazene oligomer,
3 to 9 weight percent of the methyl p-cumylphenyl phosphonate oligomer, and
0.5 to 1.5 weight percent of the drip retardant.

13. An article comprising a composition comprising, based on the total weight of polymers and flame retardants,
25 to 75 weight percent of an aromatic polycarbonate;
10 to 40 weight percent of a polycarbonate-polysiloxane block copolymer;
10 to 30 weight percent of a poly(alkylene terephthalate);
5 to 20 weight percent of a flame retardant comprising
2 to 18 weight percent of an oligomeric or polymeric bis(aryloxy)phosphazene; and
2 to 18 weight percent of an organophosphine oxide, an oligomeric or polymeric aromatic phosphonate, or a combination thereof; and
0.05 to 5 weight percent of a drip retardant.

14. The article of claim 13, wherein the article is a consumer electronic component, an automotive component, a mass transportation component, a medical device component, an electrical component, or a lighting component.

15. The article of claim 13 or 14,
wherein the aromatic polycarbonate comprises a bisphenol A polycarbonate and a poly(2-phenyl-3,3-bis(4-hydroxyphenyl)phthalimidine)-poly(bisphenol A) copolycarbonate;
wherein the poly(alkylene terephthalate) comprises polyethylene terephthalate;
wherein the flame retardant comprises a bis(phenoxy)phosphazene oligomer and a methyl p-cumylphenyl phosphonate oligomer;
wherein the drip retardant comprises poly(styrene-acrylonitrile)-encapsulated polytetrafluoroethylene; and
wherein the composition comprises
25 to 35 weight percent of the aromatic polycarbonate,
30 to 40 weight percent of the polycarbonate-polysiloxane block copolymer,
15 to 25 weight percent of the poly(alkylene terephthalate),
5 to 15 weight percent of the flame retardant,
2 to 7 weight percent of the bis(phenoxy)phosphazene oligomer,
3 to 9 weight percent of the methyl p-cumylphenyl phosphonate oligomer, and
0.5 to 1.5 weight percent of the drip retardant.

## Patentansprüche

1. Zusammensetzung umfassend, basierend auf dem Gesamtgewicht von Polymeren und Flammschutzmitteln,
25 bis 75 Gewichtsprozent eines aromatischen Polycarbonats;
10 bis 40 Gewichtsprozent eines Polycarbonat-Polysiloxan-Blockcopolymers;
10 bis 30 Gewichtsprozent eines Poly(alkylenterephthalats);
5 bis 20 Gewichtsprozent eines Flammschutzmittels umfassend
2 bis 18 Gewichtsprozent eines oligomeren oder polymeren Bis(aryloxy)phosphazens; und
2 bis 18 Gewichtsprozent eines Organophosphinoxids, eines oligomeren oder polymeren aromatischen Phosphonats, oder einer Kombination davon; und
0,05 bis 5 Gewichtsprozent eines Tropfschutzmittels.

2. Zusammensetzung von Anspruch 1, wobei das aromatische Polycarbonat Wiederholungseinheiten umfasst, die die Formel 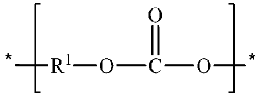 aufweisen, wobei mindestens 60 Prozent der Gesamtzahl von R¹-Gruppen aromatisch sind.

3. Zusammensetzung von Anspruch 2, wobei mindestens 90 Prozent der Gesamtanzahl von R¹-Gruppen die Formel 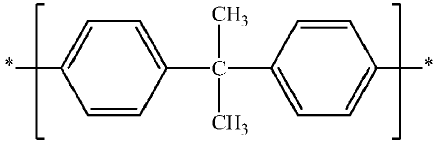 aufweisen.

4. Zusammensetzung von Anspruch 1, wobei das aromatische Polycarbonat ein Copolycarbonat umfasst, wobei das Copolycarbonat ein Copolymer von Bisphenol A und einem zweiten Monomer, welches die durch die Formel 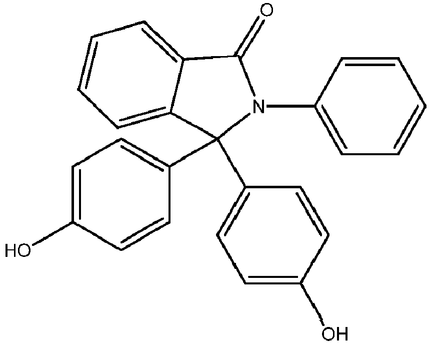 dargestellte Struktur aufweist, ist,
wobei das zweite Monomer in einer Menge von 25 bis 40 Molprozent vorliegt; und
wobei das Copolycarbonat ein gewichtgemitteltes Molekulargewicht von 15.000 bis 35.000 Dalton, wie gemessen durch Polycarbonat-Standards verwendende Gelpermeationschromatographie, aufweist.

5. Zusammensetzung einer der Ansprüche 1-4, wobei das Polycarbonat-Polysiloxan-Blockcopolymer einen Polysiloxan-Block umfasst, welcher Wiederholungseinheiten umfasst, die die Formel 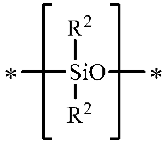
aufweisen, wobei jedes R² unabhängig eine C₁₋₁₃ monovalente organische Gruppe ist; und
wobei das Polycarbonat-Polysiloxan-Blockcopolymer 10 bis 25 Gewichtsprozent eines Polysiloxan-Blocks umfasst.

6. Zusammensetzung einer der Ansprüche 1-5, wobei das Poly(alkylenterephthalat) Alkylengruppen ausgewählt aus der Gruppe bestehend aus Ethylen, 1,3-Propylen, 1,4-Butylen, 1,5-Pentylen, 1,6-Hexylen, 1,4-Cyclohexylen, 1,4-Cyclohexandimethylen, und Kombinationen davon, umfasst.

7. Zusammensetzung einer der Ansprüche 1-6, wobei das Poly(alkylenterephthalat) Poly(butylenterephthalat) umfasst.

8. Zusammensetzung einer der Ansprüche 1-6, wobei das Poly(alkylenterephthalat) Poly(ethylenterephthalat) umfasst.

9. Zusammensetzung einer der Ansprüche 1-8, wobei das Flammschutzmittel das oligomere oder polymere Bis(aryloxy)phosphazen und das oligomere oder polymere aromatische Phosphonat umfasst.

10. Zusammensetzung einer der Ansprüche 1-9, umfassend das Organophosphinoxid; wobei das Organophosphinoxid Triphenylphosphinoxid ist.

11. Zusammensetzung einer der Ansprüche 1-10, umfassend das oligomere oder polymere aromatische Phosphonat; wobei das oligomere oder polymere aromatische Phosphonat Methyl-p-cumylphenylphosphonat-Oligomer ist.

12. Zusammensetzung von Anspruch 1,
wobei das aromatische Polycarbonat ein Bisphenol A Polycarbonat und ein Poly(2-phenyl-3,3-bis(4-hydroxyphenyl)phthalimidin)-poly(bisphenol A)copolycarbonat umfasst;
wobei das Poly(alkylenterephthalat) Polyethylenterephthalat umfasst;
wobei das Flammschutzmittel ein Bis(phenoxy)phosphazen-Oligomer und ein Methyl-p-cumylphenylphosphonat-Oligomer umfasst; wobei das Tropfschutzmittel Poly(styrol-acrylonitril)-verkapseltes Polytetrafluoroethylen umfasst; und
wobei die Zusammensetzung
25 bis 35 Gewichtsprozent des aromatischen Polycarbonats,
30 bis 40 Gewichtsprozent des Polycarbonat-Polysiloxan-Blockcopolymers,
15 bis 25 Gewichtsprozent des Poly(alkylenterephthalats),
5 bis 15 Gewichtsprozent das Flammschutzmittels,
2 bis 7 Gewichtsprozent des Bis(phenoxy)phosphazen-Oligomers,
3 bis 9 Gewichtsprozent des Methyl-p-cumylphenylphosphonat-Oligomers, und
0,5 bis 1,5 Gewichtsprozent des Tropfschutzmittels,
umfasst.

13. Artikel umfassend eine Zusammensetzung umfassend, basierend auf dem Gesamtgewicht von Polymeren und Flammschutzmitteln,
25 bis 75 Gewichtsprozent eines aromatischen Polycarbonats;
10 bis 40 Gewichtsprozent eines Polycarbonat-Polysiloxan-Blockcopolymers;
10 bis 30 Gewichtsprozent eines Poly(alkylenterephthalats);
5 bis 20 Gewichtsprozent eines Flammschutzmittels umfassend
2 bis 18 Gewichtsprozent eines oligomeren oder polymeren Bis(aryloxy)phosphazens; und
2 bis 18 Gewichtsprozent eines Organophosphinoxids, eines oligomeren oder polymeren aromatischen Phosphonats, oder einer Kombination davon; und
0,05 bis 5 Gewichtsprozent eines Tropfschutzmittels.

14. Artikel von Anspruch 13, wobei der Artikel eine Verbraucherelektronikkomponente, eine Automobilkomponente, eine Massentransportkomponente, eine Medizingerätkomponente, eine elektrische Komponente, oder eine lichttechnische Komponente ist.

15. Artikel von Anspruch 13 oder 14,
wobei das aromatische Polycarbonat ein Bisphenol A Polycarbonat und ein Poly(2-phenyl-3,3-bis(4-hydroxyphenyl)phthalimidin)-poly(bisphenol A)copolycarbonat umfasst;
wobei das Poly(alkylenterephthalat) Polyethylenterephthalat umfasst;
wobei das Flammschutzmittel ein Bis(phenoxy)phosphazen-Oligomer und ein Methyl-p-cumylphenylphosphonat-Oligomer umfasst; wobei das Tropfschutzmittel Poly(styrol-acrylonitril)-verkapseltes Polytetrafluoroethylen umfasst; und
wobei die Zusammensetzung
25 bis 35 Gewichtsprozent des aromatischen Polycarbonats,
30 bis 40 Gewichtsprozent des Polycarbonat-Polysiloxan-Blockcopolymers,
15 bis 25 Gewichtsprozent des Poly(alkylenterephthalats),
5 bis 15 Gewichtsprozent das Flammschutzmittels,
2 bis 7 Gewichtsprozent des Bis(phenoxy)phosphazen-Oligomers,
3 bis 9 Gewichtsprozent des Methyl-p-cumylphenylphosphonat-Oligomers, und
0,5 bis 1,5 Gewichtsprozent des Tropfschutzmittels,
umfasst.

## Revendications

1. Composition comprenant, sur la base du poids total des polymères et ignifugeants,
de 25 à 75 % en poids d'un polycarbonate aromatique ;
de 10 à 40 % en poids d'un copolymère séquencé polycarbonate-polysiloxane ;
de 10 à 30 % en poids d'un poly(alkylène téréphtalate) ;
de 5 à 20 % en poids d'un ignifugeant comprenant
de 2 à 18 % en poids d'un bis(aryloxy)phosphazène oligomère ou polymère ; et
de 2 à 18 % en poids d'un oxyde d'organophosphine, d'un phosphonate aromatique oligomère ou polymère, ou une combinaison de ceux-ci ; et
de 0,05 à 5 % en poids d'un retardateur d'égouttement.

2. Composition selon la revendication 1, dans laquelle le polycarbonate aromatique comprend des motifs répétitifs de formule 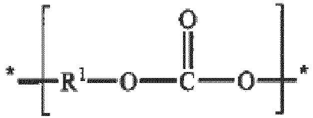 où au moins 60 % du nombre total des groupes R¹ sont aromatiques.

3. Composition selon la revendication 2, dans laquelle au moins 90 % du nombre total des groupes R¹ sont de formule

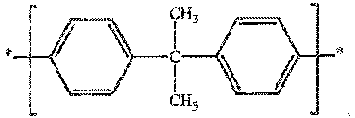

4. Composition selon la revendication 1, dans laquelle le polycarbonate aromatique comprend un copolycarbonate, où le copolycarbonate est un copolymère de bisphénol A et d'un second monomère ayant une structure représentée par la formule 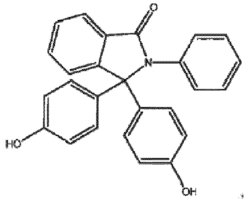
où le second monomère est présent en une quantité de 25 à 40 % en moles ; et
où le copolycarbonate a un poids moléculaire moyen en poids, mesuré par une chromatographie par perméation de gel utilisant le polycarbonate comme polymère standard, de 15 000 à 35 000 Daltons.

5. Composition selon l'une quelconque des revendications 1 à 4, dans laquelle le copolymère séquencé polycarbonate-polysiloxane comprend une séquence polysiloxane comprenant des motifs répétitifs de formule 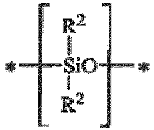
où chaque R² est indépendamment un groupe organique monovalent en C₁₋₁₃ ; et
où le copolymère séquencé polycarbonate-polysiloxane comprend de 10 à 25 % en poids de séquence polysiloxane.

6. Composition selon l'une quelconque des revendications 1 à 5, dans laquelle le poly(alkylène téréphtalate) comprend des groupes alkylène choisis dans le groupe constitué par l'éthylène, le 1,3-propylène, le 1,4-butylène, le 1,5-pentylène, le 1,6-hexylène, le 1,4-cyclohexylène, le 1,4-cyclohexanediméthylène, et leurs combinaisons.

7. Composition selon l'une quelconque des revendications 1 à 6, dans laquelle le poly(alkylène téréphtalate) comprend le poly(butylène téréphtalate).

8. Composition selon l'une quelconque des revendications 1 à 6, dans laquelle le poly(alkylène téréphtalate) comprend le poly(éthylène téréphtalate).

9. Composition selon l'une quelconque des revendications 1 à 8, dans laquelle l'ignifugeant comprend le bis(aryloxy)phosphazène oligomère ou polymère, et le phosphonate aromatique oligomère ou polymère.

10. Composition selon l'une quelconque des revendications 1 à 9, comprenant l'oxyde d'organophosphine, dans laquelle l'oxyde d'organophosphine est un oxyde de triphénylphosphine.

11. Composition selon l'une quelconque des revendications 1 à 10, comprenant le phosphonate aromatique oligomère ou polymère, dans laquelle le phosphonate aromatique oligomère ou polymère est un oligomère de p-cumylphénylphosphonate de méthyle.

12. Composition selon la revendication 1,
dans laquelle le polycarbonate aromatique comprend un polycarbonate de bisphénol A et un copolycarbonate de poly(2-phényl-3,3-bis(4-hydroxyphényl)-phtalimidine)-poly(bisphénol A) ;
dans laquelle le poly(alkylène téréphtalate) comprend le polyéthylène téréphtalate ; dans laquelle l'ignifugeant comprend un oligomère de bis(phénoxy)phosphazène et un oligomère de p-cumylphénylphosphonate de méthyle ;
dans laquelle le retardateur d'égouttement comprend un polytétrafluoroéthylène encapsulé dans un poly(styrène-acrylonitrile) ; et
dans laquelle la composition comprend :
de 25 à 35 % en poids de polycarbonate aromatique,
de 30 à 40 % en poids de copolymère séquencé polycarbonate-polysiloxane ;
de 15 à 25 % en poids de poly(alkylène téréphtalate) ;
de 5 à 15 % en poids d'ignifugeant,
de 2 à 7 % en poids d'oligomère bis(phénoxy)phosphazène,
de 3 à 9 % en poids d'oligomère p-cumylphénylphosphonate de méthyle, et
de 0,5 à 1,5 % en poids de retardateur d'égouttement.

13. Article comprenant une composition comprenant, sur la base du poids total des polymères et ignifugeants,
de 25 à 75 % en poids d'un polycarbonate aromatique,
de 10 à 40 % en poids d'un copolymère séquencé polycarbonate-polysiloxane ;
de 10 à 30 % en poids d'un poly(alkylène téréphtalate) ;
de 5 à 20 % en poids d'un ignifugeant comprenant
de 2 à 18 % en poids d'un bis(aryloxy)phosphazène oligomère ou polymère ; et
de 2 à 18 % en poids d'un oxyde d'organophosphine, d'un phosphonate aromatique oligomère ou polymère, ou une combinaison de ceux-ci ; et
de 0,05 à 5 % en poids d'un retardateur d'égouttement.

14. Article selon la revendication 13, dans lequel l'article est un composant électronique grand public, un composant d'automobile, un composant pour transport en commun, un composant de dispositif médical, un composant électrique, ou un composant d'éclairage.

15. Article selon la revendication 13 ou 14,
dans lequel le polycarbonate aromatique comprend un polycarbonate de bisphénol A et un copolycarbonate de poly(2-phényl-3,3-bis(4-hydroxyphényl)-phtalimidine)-poly(bisphénol A) ;
dans lequel le poly(alkylène téréphtalate) comprend un polyéthylène téréphtalate ;
dans lequel l'ignifugeant comprend un oligomère de bis(phénoxy)phosphazène et un oligomère de p-cumylphénylphosphonate de méthyle ;
dans lequel le retardateur d'égouttement comprend un polytétrafluoroéthylène encapsulé dans un poly(styrène-acrylonitrile) ; et
dans lequel la composition comprend :
de 25 à 35 % en poids de polycarbonate aromatique,
de 30 à 40 % en poids de copolymère séquencé polycarbonate-polysiloxane ;
de 15 à 25 % en poids de poly(alkylène téréphtalate) ;
de 5 à 15 % en poids d'ignifugeant,
de 2 à 7 % en poids d'oligomère bis(phénoxy)phosphazène,
de 3 à 9 % en poids d'oligomère p-cumylphénylphosphonate de méthyle, et
de 0,5 à 1,5 % en poids de retardateur d'égouttement.
